## Europäisches Patentamt
## European Patent Office
## Office européen des brevets

(19)

(11) Numéro de publication : **0 192 538**
**B1**

(12)
# FASCICULE DE BREVET EUROPÉEN

(45) Date de publication du fascicule du brevet :
**09.11.88**

(51) Int. Cl.⁴ : **C 01 G 29/00**

(21) Numéro de dépôt : **86400231.6**

(22) Date de dépôt : **04.02.86**

---

(54) **Procédé de préparation de germanate de bismuth de formule Bi4Ge3O12.**

---

(30) Priorité : **12.02.85 FR 8501949**

(43) Date de publication de la demande :
**27.08.86 Bulletin 86/35**

(45) Mention de la délivrance du brevet :
**09.11.88 Bulletin 88/45**

(84) Etats contractants désignés :
**CH DE GB IT LI NL**

(56) Documents cités :
**FR-A- 2 390 401**

(73) Titulaire : **COMMISSARIAT A L'ENERGIE ATOMIQUE**
**31/33, rue de la Fédération**
**F-75015 Paris (FR)**

(72) Inventeur : **Henry, Jean-Yves**
**5, rue de la Grange**
**F-38240 Meylan (FR)**

(74) Mandataire : **Mongrédien, André et al**
**c/o BREVATOME 25, rue de Ponthieu**
**F-75008 Paris (FR)**

EP 0 192 538 B1

## Description

La présente invention a pour objet un procédé de préparation de germanate de bismuth stoechiométrique de formule $Bi_4Ge_3O_{12}$.

De façon plus précise, elle concerne la préparation d'une poudre polycristalline de germanate de bismuth $Bi_4Ge_3O_{12}$ présentant des caractéristiques de pureté et d'homogénéité convenant à la fabrication de monocristaux de germanate de bismuth utilisables comme scintillateurs.

Jusqu'à présent, on a préparé de la poudre de germanate de bismuth $Bi_4Ge_3O_{12}$ en utilisant des techniques par voie sèche en général à partir des oxydes de bismuth et de germanium, en opérant de préférence en lit fluidisé ou en four tournant, à des températures supérieures à 600/700 °C.

Lorsque l'on adopte cette technique, la synthèse n'est que partielle et les rendements sont généralement de l'ordre de 65 à 85 %. Ce mauvais rendement est dû, d'une part, à la faible interaction acide-base entre l'oxyde de germanium $GeO_2$ et l'oxyde de bismuth $Bi_2O_3$ et, d'autre part, à l'apparition de $GeO_2$ sous forme quadratique qui est remarquablement inerte. En fin d'opération, on obtient donc du germanate de bismuth $Bi_4Ge_3O_{12}$ accompagné d'autres composés tels que $Bi_{12}GeO_{20}$, $GeO_2$ hexagonal et $GeO_2$ quadratique, ce qui pose des problèmes pour la fabrication ultérieure de monocristaux de germanate de bismuth de grande pureté.

La présente invention a précisément pour objet un procédé de préparation de germanate de bismuth qui permet d'éviter cet inconvénient et d'obtenir directement une poudre de germanate de bismuth polycristalline stoechiométrique.

Le procédé, selon l'invention, de préparation de germanate de bismuth de formule $Bi_4Ge_3O_{12}$ comprend les étapes successives suivantes :

a) introduire dans une solution aqueuse :
- au moins un composé de bismuth capable de libérer en solution des complexes solubles de bismuth, et
- au moins un composé de germanium capable de libérer en solution des complexés solubles de germanium,

b) amener le pH et la température de la solution aqueuse dans le domaine de stabilité de la phase $Bi_4Ge_3O_{12}$ à des valeurs telles que le composé de bismuth et le composé de germanium libèrent simultanément et respectivement dans la solution lesdits complexes solubles de bismuth et lesdits complexes solubles de germanium en concentration suffisante,

c) maintenir le pH et la température de la solution à des valeurs telles que lesdits complexes du bismuth et du germanium réagissent entre eux pour former dans la solution un précipité de germanate de bismuth $Bi_4Ge_3O_{12}$,

d) amener ensuite le pH de la solution aqueuse à des valeurs telles que la concentration en solution des complexes du bismuth devienne négligeable alors que le composé du germanium peut libérer des complexes solubles,

e) séparer les polycristaux de ladite solution pour récupérer le précipité de germanate de bismuth $Bi_4Ge_3O_{12}$ obtenu.

Le procédé de l'invention consiste ainsi à réaliser la synthèse en milieu aqueux, en dissolvant au fur et à mesure dans la solution les composés d'appoint du bismuth et du germanium, de façon à obtenir des concentrations suffisantes de complexes de bismuth et de complexes de germanium qui réagissent entre eux en solution pour former un précipité de germanate de bismuth.

De préférence, en fin de réaction, on amène progressivement le pH de la solution aqueuse à des valeurs telles que la concentration en solution des complexes du bismuth devienne négligeable alors que le composé de germanium peut libérer des complexes solubles. Ainsi, en opérant avec un excès de composé de germanium, on peut s'assurer que la totalité du bismuth est passé en solution et a réagi avec le germanium pour former le germanate de bismuth.

En calculant l'excès de composé de germanium par rapport à la stoechiométrie de telle sorte qu'il se retrouve en solution sous forme de complexes solubles, la phase solide, en fin de réaction, est uniquement constituée d'un précipité de polycristaux de germanate de bismuth que l'on peut séparer facilement de la solution, par exemple par décantation.

De préférence, on soumet ensuite les polycristaux de germanate de bismuth ainsi séparés à un lavage à l'eau. Ce lavage à l'eau élimine entre autres, l'éventuel précipité d'oxyde de germanium dû à l'introduction d'un excès trop important de composé de germanium.

Le procédé de synthèse fait intervenir plusieurs paramètres interdépendants parmi lesquels, la nature des composés d'apport, la température et le pH.

Comme composés d'apport du bismuth on choisit ceux capables de libérer des complexes solubles dans les conditions mentionnées aux étapes b) et c) du procédé conforme à l'invention. Parmi ces derniers on peut citer le nitrate de bismuth hydraté $Bi(NO_3)_3, 5OH_2$ ou un oxyde de bismuth.

Comme composés d'apport du germanium on choisit ceux capables de libérer des complexes solubles dans les conditions indiquées aux étapes b) et c) du procédé selon l'invention. Parmi ceux-ci on peut citer l'oxyde de germanium amorphe, l'oxyde de germanium hexagonal, les germanates d'ammonium.

Les températures utilisées doivent être suffisamment basses pour simplifier au maximum le procédé industriel de préparation de poudre polycristalline de haute pureté. Elles ne doivent pas être trop basses pour pouvoir, dans le domaine de stabilité thermique en solution aqueuse du germanate de bismuth $Bi_4Ge_3O_{12}$, contribuer à une cinétique de vitesse de réaction de synthèse suffisante pour répondre aux impératifs industriels. On utilise en général des températures allant de 60 °C à 120 °C.

Les conditions de pH doivent assurer la stabilité relative du germanate de bismuth $Bi_4Ge_3O_{12}$ et fournir en solution simultanément des concentrations en complexes du bismuth et en complexes du germanium suffisantes pour permettre une vitesse de réaction appréciable.

Les concentrations minimales de complexes en solution sont en général de 0,5 g par litre.

Pendant la réaction de synthèse correspondant aux points b) et c) du procédé selon l'invention, le pH est compris de préférence entre 0,5 et 5. En fin de synthèse, correspondant au point d) du procédé selon l'invention, le pH est amené de préférence entre 4 et 8.

Le procédé de l'invention présente de nombreux avantages par rapport aux procédés connus.

La synthèse basse température permet entre autres, de mieux contrôler la stoechiométrie et l'homogénéité microscopique du composé mixte formé, alors que dans la réaction à chaud de l'oxyde de germanium et de l'oxyde de bismuth par exemple, se posent des problèmes de diffusion solide à l'intérieur des grains, d'évaporation sélective, d'inhomogénéités dues à la présence possible de nombreuses phases parmi lesquelles $Bi_{12}GeO_{20}$, $Bi_4Ge_3O_{12}$, $GeO_2$ de structure hexagonale, $GeO_2$ de structure quadratique qui est remarquablement inerte.

Par ailleurs, à condition d'utiliser pour constituer le milieu réactionnel des produits de haute pureté, il est bien connu que la synthèse basse température en solution constitue un excellent moyen de purification. Aussi, ce procédé permet d'utiliser des produits de départ de qualité moindre.

D'autres caractéristiques et avantages de l'invention apparaîtront mieux à la lecture de l'exemple suivant donné bien entendu à titre non limitatif.

Cet exemple illustre la préparation de germanate de bismuth $Bi_4Ge_3O_{12}$ à partir de nitrate de bismuth de formule $Bi(NO_3)_3$, $5H_2O$ et de bioxyde de germanium $GeO_2$ de structure hexagonale.

Dans un bécher de 500 cm³, placé sur un agitateur magnétique chauffant, on met 300 g d'eau bidistillée, puis on introduit 150 g de $Bi(NO_3)_3$, $5H_2O$ et 24,9 g de $GeO_2$ de structure hexagonale, ce qui correspond à un excès de $GeO_2$ d'environ 2 g par litre par rapport au poids stoechiométrique du germanate de bismuth. On agite l'ensemble, puis on le porte à une température de 72 °C et on amène le pH à une valeur de 2,5 par addition d'ammoniaque en contrôlant le pH de la solution avec un pH mètre. Dans ces conditions, on obtient en solution des concentrations des complexes du bismuth et des complexes du germanium de plusieurs grammes par litre. Ces complexes solubles réagissent entre eux pour former du germanate de bismuth en libérant de l'acide nitrique que l'on neutralise au fur et à mesure par addition d'ammoniaque pour maintenir le pH à la valeur de 2,5 et assurer une libération continue des complexes de bismuth et de germanium en solution et permettre à la réaction de se poursuivre. En fin de synthèse soit au bout de 2 à 3 heures, la totalité du bismuth est passée en solution et l'addition d'ammoniaque conduit à une augmentation du pH. On poursuit cette addition lentement pour amener le pH à la valeur de 5, ce qui permet de stabiliser le germanate de bismuth précipité dans la solution.

On refroidit alors la solution et on interrompt l'agitation mécanique pour séparer les polycristaux de germanate de bismuth par décantation. On élimine alors la solution et l'on soumet les polycristaux à deux rinçages successifs à l'eau chaude pour éliminer le nitrate d'ammonium et le bioxyde de germanium en excès.

On obtient ainsi environ 100 g de germanate de bismuth $Bi_4Ge_3O_{12}$ monophasé qui présente des qualités satisfaisantes pour la réalisation de scintillateurs.

**Revendications**

1. Procédé de préparation de germanate de bismuth de formule $Bi_4Ge_3O_{12}$, caractérisé en ce qu'il comprend les étapes successives suivantes :
   a) introduire dans une solution aqueuse :
   - au moins un composé de bismuth capable de libérer en solution des complexes solubles de bismuth, et
   - au moins un composé de germanium capable de libérer en solution des complexes solubles de germanium,
   b) amener le pH et la température de la solution aqueuse dans le domaine de stabilité de la phase $Bi_4Ge_3O_{12}$ à des valeurs telles que le composé de bismuth et le composé de germanium libèrent simultanément et respectivement dans la solution lesdits complexes solubles de bismuth et lesdits complexes solubles de germanium en concentration suffisante,
   c) maintenir le pH et la température de la solution à des valeurs telles que lesdits complexes de bismuth et de germanium réagissent entre eux pour former dans la solution un précipité de germanate de bismuth $Bi_4Ge_3O_{12}$,
   d) amener ensuite le pH de la solution aqueuse à des valeurs telles que la concentration en solution des complexes du bismuth devienne négligeable alors que le composé de germanium peut libérer des complexes solubles,
   e) séparer les polycristaux de ladite solution pour récupérer le précipité de germanate de bismuth $Bi_4Ge_3O_{12}$ obtenu.

2. Procédé selon la revendication 1, caractérisé en ce que dans l'étape a), on introduit dans la solution un excès de composé de germanium par rapport à la quantité stoechiométrique nécessaire pour former le germanate de bismuth $Bi_4Ge_3O_{12}$.

3. Procédé selon la revendication 2, caractérisé en ce que l'on soumet ensuite les polycristaux de germanate de bismuth à un lavage à l'eau.

4. Procédé selon l'une quelconque des revendications 1 à 3, caractérisé en ce que le composé du bismuth est choisi parmi ceux capables de libérer des complexes solubles dans les conditions mentionnées aux étapes b) et c) de la revendication 1.

5. Procédé selon la revendication 4, caractérisé en ce que le composé de bismuth est du nitrate de bismuth hydraté $Bi(NO_3)_3$, $5H_2O$.

6. Procédé selon la revendication 4, caractérisé en ce que le composé du bismuth est un oxyde de bismuth.

7. Procédé selon l'une quelconque des revendications 1 à 6, caractérisé en ce que le composé du germanium est choisi parmi ceux capables de libérer des complexes solubles dans les conditions indiquées aux points b) et c) de la revendication 1.

8. Procédé selon la revendication 7, caractérisé en ce que le composé de germanium est choisi parmi l'oxyde de germanium amorphe $GeO_2$, l'oxyde de germanium hexagonal $GeO_2$, les germanates d'ammonium.

9. Procédé selon la revendication 5, caractérisé en ce que le composé de germanium est de l'oxyde de germanium hexagonal.

10. Procédé selon les revendications 5 et 9, caractérisé en ce que le composé de germanium étant l'oxyde de germanium hexagonal et le composé de bismuth étant le nitrate de bismuth hydraté $Bi(NO_3)_3$, $5H_2O$ on ajuste le pH de la solution dans l'étape b) et c) à une valeur comprise entre 0,5 et 5, et en ce que, en fin de réaction, dans l'étape d), on amène le pH de la solution à une valeur comprise entre 5 et 8.

11. Procédé selon la revendication 10, caractérisé en ce que l'on opère à une température inférieure à 120°c.

12. Procédé selon l'une quelconque des revendications 10 et 11, caractérisé en ce que l'on maintient le pH à une valeur de 0,5 à 5 pendant la réaction par addition d'ammoniaque.

## Claims

1. Process for the preparation of bismuth germanate of formula $Bi_4Ge_3O_{12}$, characterized in that it comprises the following successive stages :

a) introducing into an aqueous solution at least one bismuth compound able to release soluble bismuth complexes in solution and at least one germanium compound able to release soluble germanium complexes in solution,

b) bringing the pH and temperature of the aqueous solution in the stability range of the $Bi_4Ge_3O_{12}$ phase to value such that the bismuth compound and germanium compound simultaneously and respectively release into the solution said soluble bismuth complexes and said soluble germanium complexes in an adequate concentration,

c) maintaining the pH and temperature of the solution at values such that said bismuth and germanium complexes react with one another to form a bismuth germanate $Bi_4Ge_3O_{12}$ precipitate in the solution,

d) then bringing the pH of the aqueous solution to values such that the concentration in solution of the bismuth complexes becomes negligible, whereas the germanium compound can release soluble complexes,

e) separating the polycrystals of said solution to recover the precipitate of bismuth germanate $Bi_4Ge_3O_{12}$ obtained.

2. Process according to claim 1, characterized in that in stage a) is introduced into the solution an excess of the germanium compound compared with the stoichiometric quantity necessary for forming bismuth germanate $Bi_4Ge_3O_{12}$.

3. Process according to claim 2, characterized in that the bismuth germanate polycrystals are then washed with water.

4. Process according to any one of the claims 1 to 3, characterized in that the bismuth compound is chosen from among those able to release soluble complexes under the conditions referred to in stages b) and c) of claim 1.

5. Process according to claim 4, characterized in that the bismuth compound is hydrated bismuth nitrate $Bi(NO_3)_3$, $5H_2O$.

6. Process according to claim 4, characterized in that the bismuth compound is a bismuth oxide.

7. Process according to any one of the claims 1 to 6, characterized in that the germanium compound is chosen from among those able to release soluble complexes under the conditions referred to in points b) and c) of claim 1.

8. Process according to claim 7, characterized in that the germanium compound is chosen from among amorphous germanium oxide $GeO_2$, hexagonal germanium oxide $GeO_2$ and ammonium germanates.

9. Process according to claim 5, characterized in that the germanium compound is hexagonal germanium oxide.

10. Process according to claims 5 and 9, characterized in that with the germanium compound being hexagonal germanium oxide and the bismuth compound being hydrated bismuth nitrate $Bi(NO_3)_3$, $5H_2O$, the pH of the solution in stages b) and c) is adjusted to a value between 0.5 and 5 and wherein at the end of the reaction, in stage d), the pH of the solution is brought to a value between 5 and 8.

11. Process according to claim 10, characterized in that working takes place at a temperature below 120 °C.

12. Process according to either of the claims 10 and 11, characterized in that the pH is maintained at a value of 0.5 to 5 during the reaction by the addition of ammonia.

## Patentansprüche

1. Verfahren zum Herstellen von Wismutgermanat der Formel $Bi_4Ge_3O_{12}$, dadurch gekennzeichnet, daß es die folgenden aufeinanderfolgenden Schritte umfaßt :

a) Eintrag in eine wässrige Lösung :

- wenigstens einer Wismutverbindung, welche geeignet ist, in der Lösung lösliche Wismutkomplexe freizusetzen, und

- wenigstens einer Germaniumverbindung, welche geeignet ist, in der Lösung lösliche Germaniumkomplexe freizusetzen,

b) Einstellen des pH-Werts und der Temperatur der wässrigen Lösung innerhalb des Stabilitätsbereichs der Phase $Bi_4Ge_3O_{12}$ auf derartige Werte, daß die Wismutverbindung und die Germaniumverbindung den löslichen Wismutkomplex bzw. den löslichen Germaniumkomplex gleichzeitig in ausreichender Konzentration in der Lösung freisetzen,

c) Halten des pH-Werts und der Temperatur der Lösung auf derartigen Werten, daß die Wismut- und Germaniumkomplexe miteinander reagieren und in der Lösung einen Niederschlag von Wismutgermanat der Formel $Bi_4Ge_3O_{12}$ bilden,

d) anschließendes Einstellen des pH-Werts und der Temperatur der Lösung auf derartige Werte, daß die Konzentration der Wismutkomplexe in der Lösung vernachlässigbar niedrig wird, während die Germaniumverbindung lösliche Komplexe freisetzen kann,

e) Trennen der Polykristalle von der Lösung zur Gewinnung des Niederschlags von Wismutgermanat der Formel $Bi_4Ge_3O_{12}$.

2. Verfahren nach Anspruch 1, dadurch gekennzeichnet, daß man beim Schritt a) in bezug auf die für die Bildung von Wismutgermanat der Formel $Bi_4Ge_3O_{12}$ notwendige stöchiometrische Menge einen Überschuß der Germaniumverbindung in die Lösung einträgt.

3. Verfahren nach Anspruch 2, dadurch gekennzeichnet, daß man die Wismutgermanat-Polykristalle anschließend einer Waschung mit Wasser unterzieht.

4. Verfahren nach einem der Ansprüche 1 bis 3, dadurch gekennzeichnet, daß die Wismutverbindung unter solchen Verbindungen ausgewählt wird, welche zum Freisetzen löslicher Komplexe unter den unter Punkt b) und c) von Anspruch 1 genannten Bedingungen befähigt sind.

5. Verfahren nach Anspruch 4, dadurch gekennzeichnet, daß die Wismutverbindung hydriertes Wismutnitrat $Bi(NO_3)_3$, $5H_2O$ ist.

6. Verfahren nach Anspruch 4, dadurch gekennzeichnet, daß die Wismutverbindung ein Wismutoxid ist.

7. Verfahren nach einem der Ansprüche 1 bis 6, dadurch gekennzeichnet, daß die Germaniumverbindung unter solchen Verbindungen ausgewählt wird, welche zur Freisetzung löslicher Komplexe unter den unter Punkt b) und c) in Anspruch 1 genannten Bedingungen befähigt sind.

8. Verfahren nach Anspruch 7, dadurch gekennzeichnet, daß die Germaniumverbindung aus der Gruppe amorphes Germaniumoxid $GeO_2$, hexagonales Germaniumoxid $GeO_2$ und Ammoniumgermanaten ausgewählt wird.

9. Verfahren nach Anspruch 5, dadurch gekennzeichnet, daß die Germaniumverbindung hexagonales Germaniumoxid ist.

10. Verfahren nach Anspruch 5 und 9, dadurch gekennzeichnet, daß, wenn die Germaniumverbindung hexagonales Germaniumoxid und die Wismutverbindung hydriertes Wismutnitrat $Bi(NO_3)_3$, $5H_2O$ ist, man den pH-Wert der Lösung in den Schritten b) und c) auf einen Wert zwischen 0,5 und 5 einstellt, und daß man den pH-Wert am Ende der Reaktion im Schritt d) auf einen Wert zwischen 5 und 8 bringt.

11. Verfahren nach Anspruch 10, dadurch gekennzeichnet, daß man bei einer Temperatur unter 120 °C arbeitet.

12. Verfahren nach einem der Ansprüche 10 und 11, dadurch gekennzeichnet, daß man den pH-Wert während der Reaktion durch den Zusatz von Ammoniak auf einem Wert von 0,5 bis 5 hält.